Europäisches Patentamt

European Patent Office

Office européen des brevets

(19)

(11) Veröffentlichungsnummer : **0 201 750**
**B1**

(12) **EUROPÄISCHE PATENTSCHRIFT**

(45) Veröffentlichungstag der Patentschrift :
23.11.89

(21) Anmeldenummer : 86105332.0

(22) Anmeldetag : 17.04.86

(51) Int. Cl.⁴ : **B 23 K 9/00**

(54) Verfahren zum Lichtbogenschweissen von stickstofflegierten Stählen.

(30) Priorität : 11.05.85 DE 3517015

(43) Veröffentlichungstag der Anmeldung :
20.11.86 Patentblatt 86/47

(45) Bekanntmachung des Hinweises auf die Patenterteilung : 23.11.89 Patentblatt 89/47

(84) Benannte Vertragsstaaten :
AT BE FR GB IT SE

(56) Entgegenhaltungen :
DE–A– 2 043 996
DE–B– 2 249 716

(73) Patentinhaber : **Fried. Krupp Gesellschaft mit beschränkter Haftung**
**Altendorfer Strasse 103**
**D-4300 Essen 1 (DE)**

(72) Erfinder : **Müller, Reinhard, Dr.**
**Klapperstrasse 97**
**D-4300 Essen 14 (DE)**
Erfinder : **Trösken, Friedhelm, Dr.**
**Haarkampstrasse 21**
**D-4630 Bochum 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 201 750 B1

**Beschreibung**

Die Erfindung betrifft ein Verfahren zum Lichtbogen-Schmelzschweißen bei Atmosphären-Bedingungen von stickstofflegierten Stählen, deren Massenanteil an Stickstoff oberhalb der Löslichkeitsgrenze bei Atmosphären-Bedingungen liegt.

Derartige Stähle können z. B. als Cr-Mn-Stähle durch das sog. Druck-Elektroschlackeumschmelzverfahren (DESU-Verfahren, vgl. z. B. DE-PS 29 24 415) oder in einem Plasmalichtbogenofen hergestellt sein. Der hohe Stickstoffgehalt soll dabei eine deutliche Anhebung des Festigkeitsniveaus bewirken, ohne die Zähigkeits- und Verformungseigenschaften negativ zu beeinflussen.

Die Löslichkeitsgrenze, auch nur als Löslichkeit bezeichnet, eines Stahls für Stickstoff ist im wesentlichen abhängig von dem Partialdruck des Stickstoffs, den Legierungselementen und deren Massenanteil im Stahl, wobei der Partialdruck des Stickstoffs während des schmelzflüssigen Zustands des Stahls gemeint ist und die Löslichkeit mit der Quadratwurzel des Partialdrucks steigt.

Während die Stickstoff-Löslichkeit von reinem Eisen $[\% \, N_g]_{Fe}$ bei einem Stickstoff-Partialdruck von 0,8 bar 0,0395 % beträgt (bei den in diesen Unterlagen angegebenen %-Angaben handelt es sich durchweg um Massen-bzw. Gewichts-%), ist die Stickstofflöslichkeitsgrenze $N_g$ (im folgenden auch kurz als Stickstofflöslichkeit bezeichnet) einer eisenreichen Mehrstofflegierung, also eines Stahls,

$$[\% \, N_g]_{Fe, \, C, \, X, \, Y, ...} = 0,0395/f_N \qquad (1)$$

wobei $f_N$ der sog. Aktivitätsfaktor ist, der nach Frohberg, Martin G.: Thermodynamik für Metallurgen und Werkstofftechniker, Leipzig: VEB Deutscher Verlag für Grundstoffindustrie 1980 die aus Basis 10 und dem aus der Reihe

$$e_N^C \, [\% \, C] + e_N^X \, [\% \, X] + e_N^Y \, [\% \, Y] + ...$$

bestehenden Exponenten Gebildete Potenz ist. Anders ausgedrückt: Der gewöhnliche oder dekadische Logarithmus des sog. Aktivitätsfaktors $f_N$ ist gleich der obengenannten Reihe, wobei

$$e_N^C, \, e_N^X, \, e_N^Y, \, ...$$

die sog. Wirkungsparameter von Kohlenstoff und der übrigen Legierungselemente (hier noch allgemein mit X, Y, ... bezeichnet) für stickstoff und

$$[\% \, X], \, [\% \, Y], \, ...$$

den Anteil der betreffenden Legierungselemente im Stahl bedeuten.

Nach H. Schenck, M. G. Frohberg und H. Graf: Untersuchungen über die Beeinflussung der Gleichgewichte von Stickstoff mit flüssigen Eisenlegierungen durch den Zusatz weiterer Elemente (II), Archiv für das Eisenhüttenwesen 30(1959)9, S. 533-537 sind die Wirkungsparameter $e_N$ für die einzelnen Legierungselemente wie folgt:

| Element | $e_N$ | Element | $e_N$ |
|---------|-------|---------|-------|
| Chrom | - 0,045 | Niob | - 0,061 |
| Kohlenstoff | + 0,125 | Silizium | + 0,065 |
| Mangan | - 0,020 | Titan | - 0,530 |
| Molybdän | - 0,013 | Vanadium | - 0,010 |
| Nickel | + 0,010 | Wolfram | - 0,0015 |

Anhand dieser Werte läßt sich die Stickstofflöslichkeit $N_g$ für einen Stickstoff-Partialdruck von 0,8 bar für jeden Stahl, dessen chemische Zusammensetzung bekannt ist, bestimmen zu:

$$[\% \, N_g]_{Leg \, (Fe, \, C, \, X, \, Y, ...)} = \frac{0,0395}{10^{e_N^C[\% \, C] + e_N^X[\% \, X] + e_N^Y[\% \, Y] + ...}} \qquad (2)$$

Beim Lichtbogen-Schmelzschweißen hochaufgestickter Stähle in normalen Werkstätten und auf Baustellen, auf denen immer Atmosphärenbedingungen vorhanden sind, unterliegt der Stickstoff nur einem geringen Partialdruck von etwa 0,8 bar. Zwangsgelöster, d. h; bei der Herstellung über die Löslichkeit des Stahls hinaus eingebrachter Stickstoff entweicht aus dem erschmolzenen Bereich des Stahls, was in der Schweißzone zu einer starken Porosität führt. Das Anwendungsgebiet druckaufgestickter Stähle, z. B. austenitischer, amagnetischer Stähle mit hoher Festigkeit, beschränkt sich daher auf Bauteile bzw. auf Werstücke, die nicht geschweißt werden müssen, da derartige Stähle bei diesem Verhalten als nicht schweißbar gelten.

Der Erfindung liegt die Aufgabe zugrunde, ein Verfahren anzugeben, mit dem hochaufgestickte Stähle bei Atmosphärenbedingungen porenfrei geschweißt werden können. Außerdem sollen Schweißverbindungen hergestellt werden können, deren mechanisch-technologische Gütewerte und deren chemisch-physikalische Eigenschaften denen des Grundwerkstoffs entsprechen.

Diese Aufgabe wird zum einen durch die im Hauptanspruch gekennzeichneten Merkmale gelöst. Diese Lösung liegt der Gedanke zugrunde, den während des Aufschmelzens des Grundwerkstoffs freigesetzten Stickstoff nicht aus dem Schmelzbad entweichen zu lassen, sondern ihn zumindest weitgehend im Schmelzbad zu belassen. Dies wird nun dadurch erreicht, daß der aus dem Grundwerkstoff entweichende Stickstoff durch ein hohes Aufnahmevermögen des Schweißzusatzwerkstoffs in der Schweißzone gelöst wird.

Die der Erfindung zugrundeliegende Aufgabe wird zum anderen auch die im Nebenanspruch (Anspruch 2) gekennzeichneten Merkmale gelöst. Es hat sich in überraschender Weise gezeigt, daß ein Freisetzen des zwangsgelösten Stickstoffs aus dem Schmelzbad auch dann weitgehend vermieden wird, wenn das Plasma des Lichtbogens den jeweils schmelzflüssigen Bereich der Schweißstelle gegen die sie umgebende Atmosphäre abschirmt. Im einfachsten Fall kann dies — wie beim WIG-Schweißen — ganz ohne Zusatzwerkstoff verwirklicht werden. Zwischen dem Lichtbogenplasma und dem Schmelzbad bildet sich ein Stickstoffgleichgewichtszustand aus, in dem aus dem Schmelzbad lediglich geringe Mengen Stickstoff in das Plasma übergehen. Der im Plasma befindliche Stickstoff steht über die Phasengrenze Plasma/Schmelzbad in Wechselwirkung mit dem Stickstoff des Schmelzbades. Der Stickstoff kann aus dem Plasma in die Atmosphäre praktisch ausschließlich über Konvektion kurz oberhalb des Schmelzbades bzw. der Werkstückoberfläche entweichen. Andere Mechanismen, die ein Entweichen des Stickstoffs aus dem Plasma bewirken könnten, scheiden aus, da der Stickstoffpartialdruck im Plasma in keinem Fall höher ist als der in der Atmosphäre mit 0,8 bar. Es ist im Gegenteil so, daß vom Plasma noch Stickstoff aus der Atmosphäre aufgenommen werden kann. Da die Verweildauer des Lichtbogens über dem Schmelzbad beim Schweißen recht kurz ist, ist auch der Stickstoffverlust des Schmelzbades vernachlässigbar klein.

Die Schweißstelle weist auch bei dieser Lösung keine Poren auf und es tritt praktisch kein Festigkeitsabfall gegenüber dem Grundwerkstoff ein.

Während in beiden Lösungsfällen porenfreie Schweißverbindungen erreicht werden, deren Festigkeitswerte im wesentlichen denen des Grundwerkstoffsentsprechen, kommt im Falle der Lösung nach dem Nebenanspruch vorteilhaft hinzu, daß der Schweißzusatzwerkstoff eine chemische Zusammensetzung aufweisen kann, der dem Grundwerkstoff entspricht oder ihm zumindest nahekommt. Dadurch können die mechanisch-technologischen Gütewerte die chemisch-physikalischen Eigenschaften des Grundwerkstoffs, insbesondere auch die Korrosionsbeständigkeit und die magnetischen Eigenschaften auch in der Schweißzone weitgehend erreicht werden.

Die Abschirmung des Schmelzbades gegen die Atmosphäre erfolgt dadurch, daß es insgesamt von dem Plasma des Lichtbogens bedeckt wird. Gegebenenfalls müssen die einzelnen Schweißparameter, wie Schweißspannung, Schweißstromstärke, Schweißgeschwindigkeit und Elektrodendurchmesser (insbesondere beim MIG-, MAG- und UP-Schweißen) so eingestellt werden, daß der jeweils schmelzflüssige Bereich der Schweißnaht nicht größer ist als der « Brennfleck » des Plasmas.

Sofern Werkstücke mit einer vorbereiteten Verbindungsnaht, z. B. einer V-Naht, mit einem Spalt zu verschweißen sind, kann das Schmelzbad der Wurzellage nach Anspruch 4 durch eine metallische Unterlage gegen die Atmosphäre abgeschirmt werden, wobei es vorteilhaft ist, eine Unterlage aus demselben, zumindest einem dem Grundwerkstoff artgleichen Werkstoff zu nehmen.

Ausführungsbeispiele des Gegenstandes der Erfindung werden im folgenden anhand der Zeichnung näher erläutert. Es zeigen :

Fig. 1 die an einer vorbereiteten V-Naht vorgenommene Wurzellage in einem Querschnitt und

Fig. 2 die an einer vorbereiteten V-Naht mit einer Schmelzbadsicherung vorgenommene Wurzellage in einem Querschnitt,
wobei in beiden Figuren die Wurzellage nach dem Erstarren des Schmelzbades dargestellt ist.

Ausführungsbeispiel 1

Es sind zwei Werkstücke 1, 2 mit einer vorbereiteten V-Naht 3 aus dem Stahl X 3 Cr Ni Mo N 18 13 unter Atmosphären-Bedingungen mit einer (nicht dargestellten) Stabelektrode verschweißt worden, deren nach DIN 32 525 Teil 2 (Ausgabe August 1979) gewonnenes reines Schweißgut einem Werkstoff der Werkstoff-Nr. 1.4842 gleichkommt. Unter dem reinen Schweißgut wird hier derjenige Teil des aus dem schmelzflüssigen Zustand erstarrten Werkstoffs der Elektrode verstanden, der sich nicht mit dem Grundwerkstoff vermischt hat.

Der Stahl X 3 Cr Ni Mo N 18 13 hatte die Zusammensetzung

| | |
|---|---|
| Kohlenstoff | 0,029 % |
| Silizium | 1,5 % |

| | | |
|---|---|---|
| Mangan | 2,2 | % |
| Chrom | 17,5 | % |
| Nickel | 13 | % |
| Molybdän | 4,6 | % |
| Stickstoff | 0,56 | % |
| Eisen | | Rest |

und das reine Schweißgut der Elektrode die Zusammensetzung

| | | |
|---|---|---|
| Kohlenstoff | 0,10 | % |
| Chrom | 24,0 | % |
| Nickel | 20,0 | % |
| Mangan | 5,5 | % |
| Silizium | 0,4 | % |
| Eisen | | Rest |

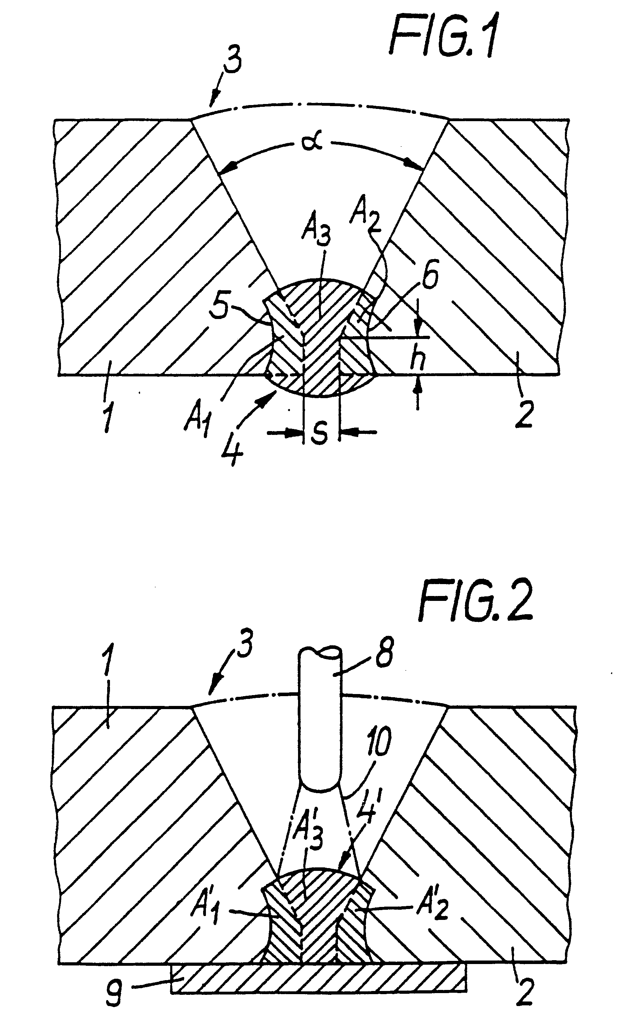

Die V-Naht 3 war mit einem Öffnungswinkel von 60°, einem Spalt s von 3 mm und einer Steghöhe h von 1,5 mm vorbereitet. Die in Fig. 1 dargestellte Wurzelnaht 4 weist an jedem Werkstückteil 1, 2 einen Einbrand 5 bzw. 6 auf, denen die Teilflächen $A_1$ bzw. $A_2$ entsprechen. Das reine Schweißgut der Elektrode ist etwa in der Mitte der Teilfläche $A_3$ vorhanden. Die Wurzelnaht 4 besteht aus

$$100 \ (A_1 + A_2)/(A_1 + A_2 + A_3) \ \% \tag{3}$$

Grundwerkstoff und

$$100 \ A_3/(A_1 + A_2 + A_3) \ \% \tag{4}$$

reinem Schweißgut der Elektrode. Das Verhältnis

$$(A_1 + A_2)/A_3 \tag{5}$$

ist dabei überschläglich mit 0,9 eingehalten worden.

Nach der oben angeführten Formel (2) ergibt sich folgende Stickstofflöslichkeitsgrenze $N_g$ bei Atmosphärenbedingungen:

a) für den Grundwerkstoff

$$[\% \ N]_{X3CrNiMoN1813} = 0,175 \ \% \tag{6}$$

b) für das reine Schweißgut der Elektrode

$$[\% \ N]_{1.4842} = 0,354 \ \% \tag{7}$$

Der prozentuale Anteil des Stickstoffs, der aus dem Grundwerkstoff (GW) beim Aufschmelzen zu entweichen sucht, ist proportional der Differenz $(N_i - N_g)$ zwischen seinem tatsächlichen Stickstoffanteil $N_i$ und seiner Stickstofflöslichkeit $N_g$.

Das prozentuale Stickstoff-Aufnahmevermögen $N_a$ des reinen Schweißguts (SG) bestimmt sich aus der Differenz zwischen der Stickstofflöslichkeit $N_g$ und einem etwa vorhandenen tatsächlichen Stickstoffanteil $N_i$ zu

$$(N_a)_{SG} = (N_g - N_i)_{SG} \tag{8}$$

Damit die Schweißnaht porenfrei ist, muß das Stickstoffaufnahmevermögen $N_a$ des Schweißgutes unter Berücksichtigung der Flächenteile $A_1$, $A_2$ und $A_3$ mindestens so groß sein wie die Menge des vom Grundwerkstoff (GW) abzugebenden Stickstoffs

$$(N_a)_{SG} \geq \frac{A_1 + A_2}{A_3} \ (N_i - N_g)_{GW} \tag{9}$$

Mit dem oben angegebenen Wert $(A_1 + A_2)/A_3 = 0,9$ ergibt sich das erforderliche Stickstoff-Aufnahmevermögen $N_a$ des reinen Schweißgutes des Zusatzwerkstoffs zu

$$(N_a)_{SG} \geq 0,9 \ (0,56 - 0,175) = 0,346 \ \% \tag{10}$$

4

Dieses erforderliche Stickstoff-Aufnahmevermögen wird von der oben unter b) angeführten tatsächlichen Stickstofflöslichkeit des Schweißgutes übertroffen, so daß der aus dem Grundwerkstoff entweichende Stickstoff im Schweißgut des Zusatzwerkstoffs vollkommen aufgenommen wird. Die durchgeführte Schweißnaht war porenfrei und frei von sonstigen Schweißfehlern.

Ausführungsbeispiel 2

Es sind zwei Werkstückteile 1, 2 mit der gleichen Nahtvorbereitung und aus demselben Stahl wie im Ausführungsbeispiel 1 mit einer Stabelektrode 8 im Lichtbogenhandschweiß-Verfahren durch eine kurze Naht 4' und weitere darüberliegende (nicht dargestellte) Nähte verschweißt worden. Vor dem Ausführen der Wurzelnaht 4' wurde der Spalt s der V-Naht 1 durch eine metallische Unterlage oder Schmelzbadsicherung 9 aus X 3 Cr Ni Mo N 18 13 unterlegt. Das nach DIN 32 525 Teil 2 (Ausgabe August 1979) gewonnene reine Schweißgut (SG) der Elektrode 8 kam einem Werkstoff der Werkstoff-Nr. 1.3986 gleich. Dabei wurde darauf geachtet, daß das Plasma 10 des Lichtbogens den jeweils schmelzflüssigen Teil der Schweißnaht vollständig abdeckt.

Das reine Schweißgut der Elektrode 8 hatte die Zusammensetzung

| Kohlenstoff | 0,034 % |
|---|---|
| Silizium | 0,58 % |
| Mangan | 5,17 % |
| Chrom | 22,87 % |
| Molybdän | 3,18 % |
| Nickel | 17,32 % |
| Stickstoff | 0,346 % |
| Eisen | Rest |

Die Schweißverbindung war porenfrei und hatte eine Streckgrenze $R_{p0,2}$ von annähernd 600 N/mm² bei + 20 °C.

Während das Stickstoff-Aufnahmevermögen $N_a$ des reinen Schweißgutes der Elektrode bei einem Aufschmelzen unter Atmosphärenbedingungen (wie bereits beim Ausführungsbeispiel 1 ausgeführt) mindestens 0,346 % sein müßte, beträgt es in diesem Ausführungsbeispiel durch seinen hohen eigenen Stickstoffgehalt von bereits 0,346 % lediglich

$$(N_a)_{SG} = (N_g - N_i)_{SG} = 0,359 - 0,346 = 0,013 \% \qquad (11)$$

Ein gutes Schweißergebnis könnte auch dann, wenn man ohne Badsicherung arbeitet, erreicht werden, wenn man die porige Wurzelnaht nach dem vollständigen Verschweißen der Werkstücke mechanisch entfernt und die Wurzelnaht durch eine neue Schweißnaht ersetzt, deren jeweils schmelzflüssiger Bereich durch das Plasma des Lichtbogens abgedeckt ist.

**Patentansprüche**

1. Verfahren zum Lichtbogen-Schmelzschweißen bei Atmosphärenbedingungen von stickstofflegierten Stählen, deren Massenanteil an Stickstoff oberhalb ihrer Löslichkeitsgrenze bei Atmosphärenbedingungen liegt, dadurch gekennzeichnet, daß ein Schweißzusatzwerkstoff verwendet wird, dessen reines Schweißgut (SG) ein Stickstoffaufnahmevermögen ($N_{aSG}$) aufweist, das mindestens gleich der Differenz aus dem tatsächlichen Stickstoffgehalt ($N_{iGW}$) des zu schweißenden Grundwerkstoffs (GW) und der Stickstofflöslichkeit ($N_{gGW}$) des Grundwerkstoffs ist, multipliziert mit dem Quotienten aus der Querschnittsfläche ($A_1 + A_2$) des Einbrandes des Grundwerkstoffs und der übrigen Querschnittsfläche ($A_3$) der aus dem schmelzflüssigen Zustand erstarrten Schweißzone.

2. Verfahren zum Lichtbogen-Schmelzschweißen bei Atmosphärenbedingungen von stickstofflegierten Stählen, deren Massenanteil an Stickstoff oberhalb der Löslichkeitsgrenze bei Atmosphärenbedingungen liegt, dadurch gekennzeichnet, daß das gesamte jeweils flüssige Schmelzbad der Schweißnaht von dem Plasma (10) des Lichtbogens gegen die Atmosphäre abgeschirmt wird.

3. Verfahren nach Anspruch 2, dadurch gekennzeichnet, daß die Schweißnaht durch Metall-Schutzgasschweißen in Kurzlichtbogen-Technik hergestellt wird.

4. Verfahren nach Anspruch 2, wobei die Schweißung in einer vorbereiteten, mit einem Spalt versehenen Verbindungsnaht erfolgt, dadurch gekennzeichnet, daß unter der Verbindungsnaht eine metallische Badsicherung (9) vorgesehen ist.

5. Verfahren nach Anspruch 4, dadurch gekennzeichnet, daß der Werkstoff der Badsicherung (9) dem Werkstoff der zu schweißenden Stähle entspricht.

6. Verfahren nach Anspruch 2, dadurch gekennzeichnet, daß ein stickstofflegierter Schweißzusatzwerkstoff verwendet wird, dessen reines Schweißgut ein Stickstoffaufnahmevermögen von 0 bis 0,2 % aufweist.

7. Verfahren nach Anspruch 2, dadurch gekennzeichnet, daß ein Schweißzusatzwerkstoff und ein Schweißhilfsstoff verwendet werden, wobei das Stickstoffaufnahmevermögen des reines Schweißgutes 0 bis 0,2 % beträgt.

## Claims

1. A method of arc fusion welding in atmospheric conditions of nitrogen-alloyed steels whose mass proportion of nitrogen is above their solubility limit in atmospheric conditions, characterized in that a weld filler material is used whose pure weld metal (WM) has a nitrogen absorption capacity ($N_{aWM}$) which is at least equal to the difference between the actual nitrogen content ($N_iBM$) of the base material (BM) to be welded and the nitrogen solubility ($N_{lWM}$) of the base material, multiplied by the quotient of the cross-sectional area ($A_1 + A_2$) of the penetration of the base material and the remaining cross-sectional area ($A_3$) of the welded zone solidified from the molten state.

2. A method of arc fusion welding in atmospheric conditions of nitrogen-alloyed steels whose mass proportion of nitrogen is above their solubility limit in atmospheric conditions, characterized in that the whole liquid molten pool of the weld seam is screened against atmosphere by the plasma (10) of the arc.

3. A method according to claim 2, characterized in that the weld seam is produced by metal inert gas welding using the short-circuiting arc technique.

4. A method according to claim 2, wherein welding is performed in a prepared joint seam provided with a gap, characterized in that a metal pool backup (9) is provided below the joint seam.

5. A method according to claim 4, characterized in that the material of the pool backup (9) corresponds to the material of the steels to be welded.

6. A method according to claim 2, characterized in that a nitrogen-alloyed weld filler material is used whose pure weld metal has a nitrogen absorption capacity of 0 to 0.2 %.

7. A method according to claim 2, characterized in that a weld filler material and a weld consumable are used, the nitrogen absorption capacity of the pure weld metal being 0 to 0.2 %.

## Revendications

1. Procédé de soudure par fusion à l'arc électrique, dans les conditions atmosphériques, d'aciers nitrurés, dont la teneur massique en azote est supérieure à la limite de solubilité dans les conditions atmosphériques, caractérisé en ce que un matériau d'apport de soudage est utilisé, dont le métal d'apport de soudage pur (SG) présente une capacité d'absorption en azote ($N_{aSG}$) qui est au moins égale à la différence entre la teneur réelle en azote ($N_{iGW}$) du matériau de base (GW) à souder et la solubilité de l'azote ($N_{gGW}$) du matériau de base, multipliée par le quotient des surfaces des sections ($A_1 + A_2$) de la zone de pénétration thermique du matériau de base par le reste de la surface de la section ($A_3$) de la zone de soudage solidifiée à partir de la phase en fusion.

2. Procédé de soudure par fusion à l'arc électrique, dans les conditions atmosphériques, d'aciers nitrurés, dont la teneur massique en azote est supérieure à la limite de solubilité dans les conditions atmosphériques, caractérisé en ce que la totalité du bain de fusion liquide du cordon de soudure est protégée de l'atmosphère par le plasma (10) de l'arc électrique.

3. Procédé suivant la revendication 2, caractérisé en ce que le cordon de soudure est réalisé au moyen d'un soudage avec électrode métallique sous atmosphère gazeuse protectrice, suivant la technique de l'arc électrique court.

4. Procédé suivant la revendication 2, la soudure se faisant dans une préparation du cordon de soudure munie d'un interstice, caractérisé en ce que, sous la préparation du cordon de soudure, est prévu un support de bain (9) métallique.

5. Procédé suivant la revendication 4, caractérisé en ce que le matériau du support de bain (9) correspond au matériau de l'acier à souder.

6. Procédé suivant la revendication 2, caractérisé en ce que l'on utilise un matériau nitruré d'apport de soudage dont le métal d'apport de soudage pur présente une capacité d'absorption en azote de 0 à 0,2 %.

7. Procédé suivant la revendication 2, caractérisé en ce que l'on utilise un matériau d'apport de soudage et un matériau adjuvant de soudage, la capacité d'absorption en azote du métal d'apport de soudage pur étant de 0 à 0,2 %.

*FIG.1*

*FIG.2*